Europäisches Patentamt

European Patent Office

Office européen des brevets

(19)

(11) Numéro de publication: **0 099 291**
**A1**

## (12) DEMANDE DE BREVET EUROPEEN

(21) Numéro de dépôt: **83401396.3**

(22) Date de dépôt: **07.07.83**

(51) Int. Cl.³: **B 60 G 17/02**

(30) Priorité: **08.07.82 FR 8212163**
**05.07.83 FR 8311379**

(43) Date de publication de la demande:
**25.01.84 Bulletin 84/4**

(84) Etats contractants désignés:
**AT BE CH DE FR GB IT LI LU NL SE**

(71) Demandeur: **Bataillie, Abel-Pascal**
**101 Route de Linselles**
**F-59250 Halluin(FR)**

(72) Inventeur: **Bataillie, Abel-Pascal**
**101 Route de Linselles**
**F-59250 Halluin(FR)**

(54) **Dispositif correcteur à fonctions multiples pour la suspension des véhicules.**

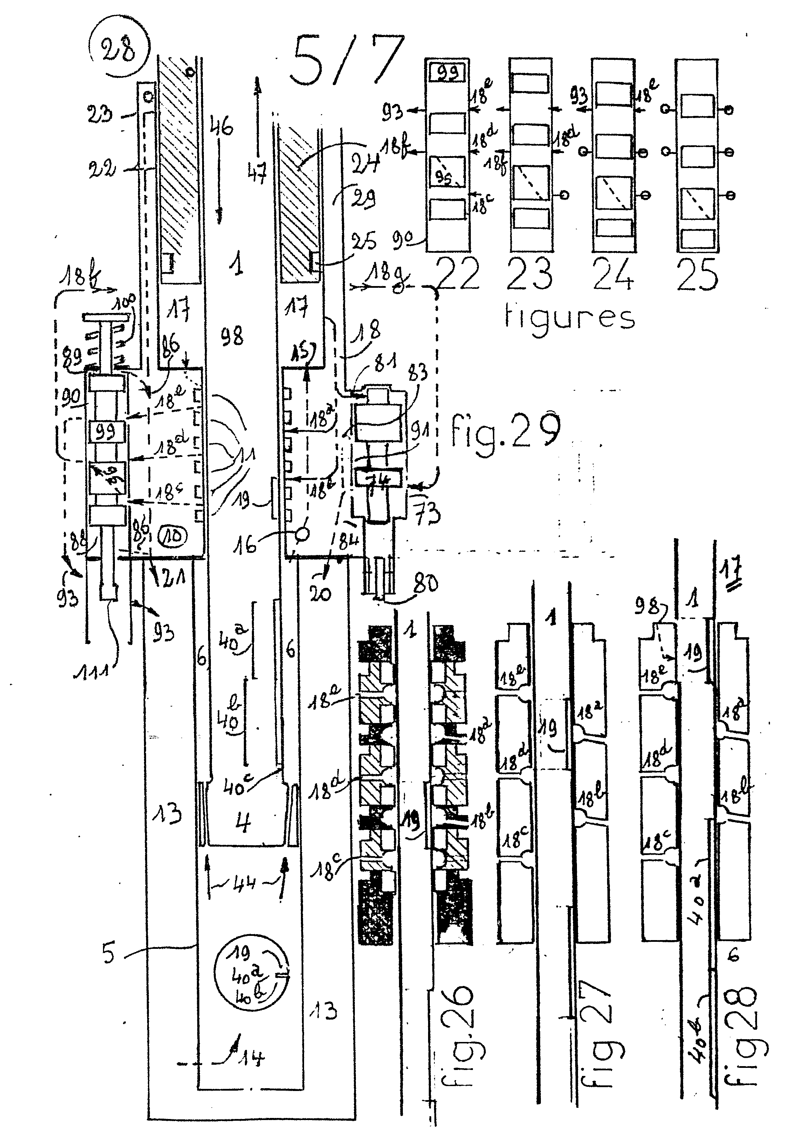

(57) Ce dispositif comprend essentiellement les éléments suivants, symbolisés par des repères:
- Une pompe hydraulique 1-7-13-15, pour l'alimentation en liquide sous pression.
- Un accumulateur hydraulique 17-24-29 destiné à compenser la hauteur de la suspension élastique pour le maintien d'une hauteur constante entre chassis et essieu.
- Un tiroir- distributeur repéré par 18 à 18e-19-20, contrôlant la hauteur constante.
- Des amortisseurs de chocs représentés par le repère 44, seul visible sur le dessin (de figure 29), réglables directement sur le véhicule.
- Un tiroir-distributeur 90-99, pour la mise à des hauteurs différentes, à commande non-automatique.
- Un tiroir-distributeur pour le rattrapage par le coté le plus chargé, du déplacement du centre de gravité: 73-74.
- Une suspension 28, à souplesse variable selon la charge imposée.

./...

fig.29

– 1 –

La présente invention concerne un DISPOSITIF CORRECTEUR A FONCTION MULTIPLES POUR LA SUSPENSION DES VEHICULES.

Il existe des solutions pour améliorer le comportement de ces suspensions et pour résoudre les problèmes inhérents aux mouvements oscillatoires d'origines diverses qui sont imposés aux véhicules durant leur déplacement.

Leur action est souvent partielle, influant sur un nombre limité des inconvénients rencontrés. Dans certains cas, entrainée par un moteur, une pompe hydraulique alimente différents dispositifs utilisés pour ces suspensions.

Le dispositif selon l'invention réalise une suspension à alimentation autonome, en un seul ensemble complet pour chaque roue, facile à installer et à remplacer lors d'un échange-standart, pour véhicules à moteur ou non, tractés ou non, équipés d'une ou plusieurs roues ou équivalents. On obtient ainsi directement, progressivement, dès le commencement du mouvement à corriger : l'amortissement des chocs dûs aux irrégularités du sol de roulage ; la souplesse de la suspension, variable suivant la charge et les efforts imposés ; la hauteur moyenne constante de la partie suspendue par rapport au sol, avec pour résultat une action anti-roulis, et une action anti-tangage ; la mise à des hauteurs différentes par commande reliée au poste de pilotage ; une action de rattrapage combattant la force centrifuge dans les virages, dévers, coups de vent et autres poussées latérales, ainsi qu'une action identique provoquant le déplacement du centre de gravité de l'arrière vers l'avant, dans les montées de côtes, et inversement dans les descentes.

Tous les mouvements spontanés énumérés ci-dessus auxquels l'invention est destinée à remédier, sont utilisés comme énergie pour l'entrainement d'une pompe à piston coulissant, fournissant le liquide sous pression nécessaire au fonctionnement automatique des divers organes que comporte l'ensemble de chaque suspension, sauf pour la mise à des hauteurs différentes, pour laquelle une intervention extérieure est requise. Elle s'utilisera sur tous accumulateurs de liquide en pression.

Les exemples de modes de réalisation non limitatifs, dessinés schématiquement, de l'invention, vont expliquer maintenant le fonctionnement des différents organes la composant.

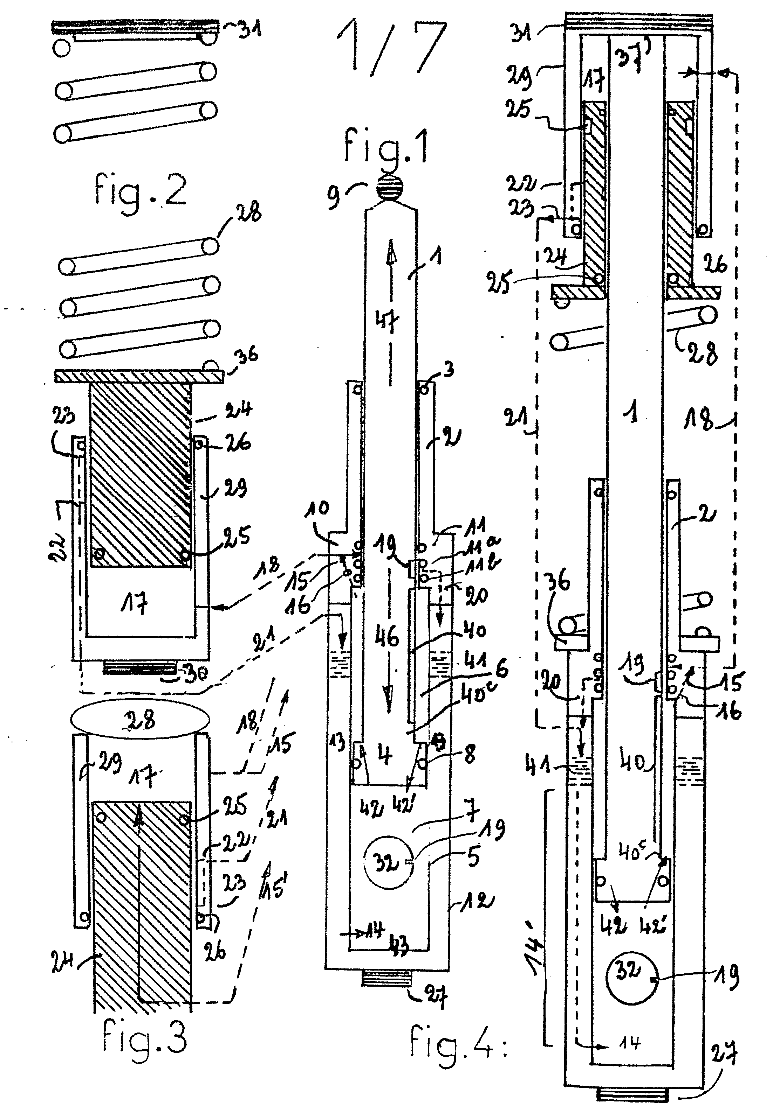

La figure 1 représente un ensemble comportant une pompe d'alimentation de liquide hydraulique sous pression, pour la totalité des circuits de l'invention. Un réservoir de fluide de capacité suffisante dont la partie supérieure est remplie de gaz ou d'air comprimé pour accélérer le passage du liquide lors de l'admission dans la pompe. Un dispositif-tiroir de rise à hauteur constante du véhicule.

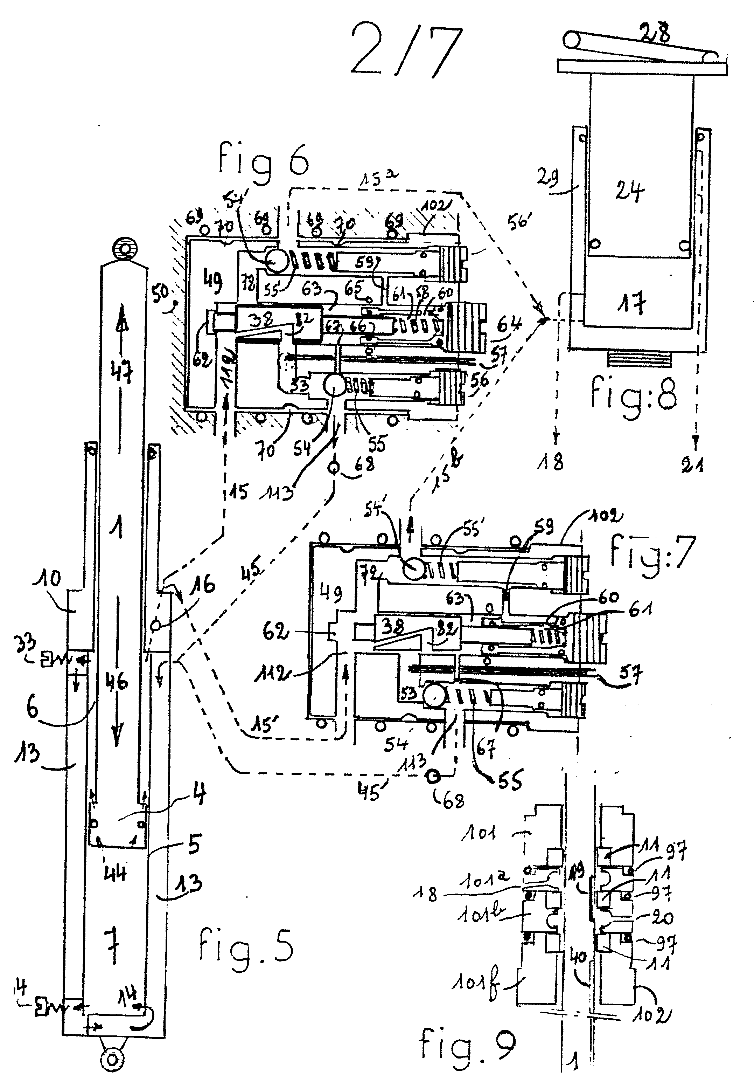

Une tige 1 munie d'un piston 4 coulisse dans un cylindre 2 et dans la base 10, ainsi que dans le cylindre 5 fixé à la base 10 par une extrémité, l'autre étant fermée par le fond 43. La base 10 contient : les segments 11, 11 a, 11 b, en métal ou autre matière, supportant sur leur face interne le frottement de la tige 1 et des rainures 19 et 40 qui y sont pratiquées. Les rainures dans le sens longitudinal de la tige 1 remplacent les diamètres différents sur piston habituellement utilisés comme tiroirs pour la distribution des liquides. Elles agissent lorsqu'elles relient les canalisations 18 et 20 entre-elles. La coupe 32 montre leur position sur la tige 1, où elles sont sur une même ligne. Elles peuvent être placées sur des axes longitudinaux différents. La base 10 contient également une canalisation 15 sur laquelle se trouve un clapet de non-retour 16, admettant du liquide seulement dans le sens de la flèche. Cette canalisation communique avec une autre canalisation 18 qui est reliée à la chambre 17 dans le cylindre 29, et à la face intérieure de la base 10 entre les segments 11 et 11 a. Une canalisation 20 elle aussi reliée à la face intérieure de la base 10, entre les segments 11 a et 11 b, et au réservoir 13 constitué à l'extérieur par une paroi 12 fixée d'une part sur la base 10, et d'autre part comporte la fixation souple 27 d'un modèle connu ou à venir. L'intérieur du réservoir est une paroi formée par le cylindre 5 fixé à la base 10 et possède un fond 43 où est situé le clapet de non-retour 14, fonctionnant dans le sens de la flèche. Le réservoir 13 contient un filtre 41 que le liquide hydraulique traverse avant d'être réemployé dans

les circuits, placé à distance convenable entre le retour du fluide au réservoir, et l'aspiration par la pompe pour réutilisation, permettant un volume transitaire suffisant de part et d'autre pour une réserve disponible plus importante que les besoins maximum en liquide. Un joint étanche 3 se trouve surle cylindre 2, et un autre 8 sur le piston 4. La partie : joints 11, canalisations 18 et 20, et les rainures 19 et 40 sera détaillée dans la figure 9.

La figure 2 comprend une suspension élastique 28 maintenue entre une plaque de fixation souple 31, et une plaque 36 solidaire du piston 24, avec segment 25, coulissant à l'intérieur d'un cylindre 29 qui comprend un joint étanche 26, un fond avec fixation souple 30, les orifices de trop-plein 22 et de décompression 23, et d'alimentation-échappement 18. Ce dernier placé de façon à conserver dans le fond de la chambre 17 une quantité de liquide constituant une butée hydraulique. Un tuyau 21 reliant le trop-plein 22 et la décompression 23 au réservoir 13. Avec la pompe d'alimentation, l'ensemble ci-dessus forme un accumulateur de pression hydraulique à usages multiples, utilisé ici comme correcteur de hauteur entre chassis et essieu.

Parmi d'autres combinaisons possibles on a choisi pour les figures 1 et 2, de considérer les fixations 31 et 9 reliées au chassis et les fixations 30 et 27 à l'essieu, à même distance partout de l'articulation entre chassis et essieu, d'un même côté du véhicule.

Par un mouvement dans le sens de la flèche 46, chassis et essieu se rapprochent. La tige 1 avec son piston 4 s'enfoncent dans le cylindre 5 chassant de la chambre 7, en passant par l'amortisseur 42, la chambre 6, la canalisation 15 et son clapet de non-retour 16 et la canalisation 18, jusque dans la chambre 17, le volume déplacé par la partie de la tige 1 pénétrant dans la chambre 6. La hauteur de la chambre 17 sera augmentée de la quantité de liquide ainsi reçue. Par réaction le ressort 28 éloigne chassis et essieu l'un de l'autre, rappelant la tige 1 dans le sens de la flèche 47, en aspi-rant du liquide du réservoir 13 par le clapet 14, dans la chambre 7, pour un volume correspondant à celui de la tige retirée (1). Un volume proportionnel à la surface du piston 4, déduction faite de la surface de la tige 1, est déplacé de la chambre 6 vers la chambre 7, passant par l'amortisseur 42°, les mouvements d'enfoncement des tige-piston 1-4 dans le sens 46 et d'aspiration dans le sens 47 se poursuivant, vont continuer de faire monter le niveau dans la chambre 17, jusqu'à ce que la rainure d'échappement 19 mette en communication les canalisations 18 et 20, provoquant ainsi l'écoulement d'une partie du liquide de la chambre 17, qui entraine un autre mouvement de descente 46 durant lequel l'échappement de la chambre 17 est à nouveau coupé par la disjonction des canaux 18 et 20, et de la rainure 19.

Ce va et vient continuel dans les sens 46 et 47 engendrant successivement l'augmentation de la hauteur de la chambre 17, et l'écoulement de l'excès de liquide de cette chambre par un échappement à un niveau préétabli constitue le maintien à une hauteur moyenne constante. Si on a monté le dispositif objet de la présente demande au moins sur les deux côtés d'un même essieu, il y aura effet antiroulis. Si un essieu complet à l'avant, et un autre à l'arrière sont équipés de même manière la maintien à hauteur constante aura un effet anti-tangage.

La hauteur maximum du piston 24 dans le cylindre 29, limitée par l'échappement de trop-plein 22 est atteinte lorsque la charge ou l'effort imposé, ou les deux à la fois, sont trop importants. A cette hauteur l'excès de liquide qui se trouve entre le joint 26 et le trop-plein 22 est éliminé par l'orifice 23, formant décompression.

On peut donner une idée théorique du travail pompe-compensateur de hauteur en prenant pour exemple une tige 1 dont la surface est : un, et un piston 24 ayant une surface cinq. Quand un effort du haut vers le bas, tendant à rapprocher chassis et essieu, entraine un écrasement du ressort 28 de six millimètres, la tige 1, avec son piston 4 s'enfonce de cinq millimètres dans le cylindre 5, envoyant le liquide excédentaire dans la chambre 17, dont le volume augmente progressivement, faisant remonter le piston 24 de un millimètre

Dans la pratique, il y a rotation complète du liquide et filtrage constant avant réemploi.

- 5 -

0099291

La figure 3 montre une variante du compensateur de hauteur de la figure 2 avec une suspension sous forme de gaz comprimé ou autre matière ayant une réaction élastique aux compressions. La canalisation 15 pourra être positionnée comme 15', en exemple non-limitatif, pour accès plus facile.

la figure 4 représente les éléments des figures 1 et 2 qui viennent d'être décrits, réunis en un seul ensemble relié au chassis par la fixation 31 et à l'essieu par la fixation 27. La tige 1 est assujettie au cylindre 29 par un assemblage 37 et traverse le piston creux 24, coulissant sur cette tige 1. Les canalisations extérieures 18 et 21 sont des tuyaux souples permettant les mouvements 46 - 47 entre chassis et essieu. La position de ce dispositif monobloc tout comme celle de la figure 1, peut être verticale comme sur le dessin, ou horizontale, en allongeant l'entrée du clapet 14 par un tuyau 14' à maintenir dans le bas, ou tête en bas, la fixation souple 31 en dessous, avec la même rallonge 14'.

Dans la figure 5 les amortisseurs 42 et 42' des figures 1 et 3 sont remplacés par un dispositif de non-retour 44 fonctionnant dans le sens indiqué sur le piston 4. Par un mouvement suivant la flèche 46 une quantité de liquide éliminée de la chambre 7 va remplir le vide créé dans la chambre 6 par la descente du piston 4. Le reste du volume chassé de la chambre 7 est envoyé, passant par l'amortisseur 34 à freinage réglable de liquide dont la résistance est moins élevée que celle dans l'amortisseur 33, vers le réservoir 13, comme sur le dessin, mais qui peut être dirigé uniquement vers la chambre 17, pour s'y accumuler. L'amortisseur 33, selon qu'il sera plus ou moins réglé, pourra laisser passer une partie du liquide, lors de chocs importants. Son rôle est cependant d'abord de freiner la remontée du piston 4 lorsuqe se produit un mouvement dans le sens 47. En plus d'un réglage de freinage il comporte un calibrage réglable admettant au maximum le volume réel provenant de la chambre 6 (surface de la tige 1 otée de la surface du piston 4).

Le volume réel déplacé dans la chambre 7 (surface du piston 4 sans aucune déduction) étant plus grand, une quantité correspondant à la surface de la tige 1 sera refusée par le calibrage de l'amortisseur 33 et devra aller vers le réservoir 13, ou vers la chambre 17 si elle prend la place du réservoir comme récepteur du liquide.

Il est possible de monter ces amortisseurs 33 et 34 de manière différente. Les figures 6 et 7 représentant un mode de réalisation intéressant par le fait qu'il s'agit d'un dispositif monobloc pouvant facilement être remplacé.

Dans la figure 6 on voit un cylindre 49 contenant les éléments d'amortissement de montée et de descente. Il comporte des gorges 70 débouchant sur les conduits 15, 15 a, 45, d'un bloc 50 qui pourrait être la base 10, mais pourrait être situé à tout endroit sur le véhicule. Dans ce bloc 50 se trouvent des joints d'étanchéité 69 et le logement de la partie 102 du cylindre 49, qui est sa fixation dans le bloc 50. Joints 69 et gorges 70 pourraient se trouver dans le bloc 50, ou les joints avec les gorges sur cylindre 49.

Les canalisations 112, 82 dans le piston 38, 53, 113, 45 et les clapets de non-retour 54 et 68 forment l'amortisseur de remontée.

Les canalisations 112, 72, 15 a, le clapet 54' forment l'amortisseur de descente. Les clapets 54 - 54', sont d'un type connu.

La circulation du liquide dans les deux sens 46 et 47 est décrite dans la figure ci-dessus, mais il est nécessaire d'identifier les autres repères de la figure 6 :

Lors d'un mouvement en 47, la remontée du piston 4 (figure 5) pousse du liquide par la canalisation 15 dans l'entrée 112, l'orifice 72 étant fermé, passe par l'orifice 82, par le canal 53 calibré par la vis pointeau 57, pousse le clapet 54 dont la résistance au passage du liquide est réglée par le ressort 55 et la vis 56, et va dans la canalisation 45 vers le réservoir 13. Le clapet de non-retour 68 est destiné à retenir en amont du liquide. Le piston 38 est maintenu dans sa position par un ressort 58 tenu par une vis 64 et par la pression du liquide dans la chambre 61 en communication par les orifices 59, 60 et 15 a, avec la chambre 17. En fin de course du piston 4, la pression devient nulle dans l'entrée 112.

La figure 7 illustre le fonctionnement de l'amortisseur de descente du piston 4. Lors d'un mouvement dans le sens 46, la quantité de liquide trop importante pour passer entièrement par le calibrage 57,

s'accumule dans le conduit 112 où la pression monte, et la surface du piston 38 étant plus importante de ce côté, pousse celui-ci vers la chambre 61. En se déplaçant ainsi le piston 38 ferme l'orifice 53 et la totalité du liquide venant de la chambre 6 est envoyée par les canaux 72 et 15 b, et par le clapet 54', vers la chambre 11. La translation du piston 38 est protégée en fin de course côté canal 112 par la chambre-butée hydraulique 62, où est emprisonné du liquide lorsque le piston revient à sa position initiale comme dans la figure 6, et du côté du moindre diamètre par la chambre 63 qui est alimentée par le passage 67, de liquide retenu par le clapet 68, la butée hydraulique se produit lorsque le passage 67 est fermé par le piston 38. La vis-cylindre 64 sert de guide au piston 38 du côté du diamètre réduit, et de séparation entre les chambres 61 et 63, avec les joints d'étanchéité 65 et 66.

Le réglage du volume de liquide refusé par le calibrage 57 définit son accumulation plus ou moins rapide pour la mise à hauteur constante.

La figure 8 complète les figures 5, 6 et 7, donnant ainsi une vue d'ensemble de la partie amortissement.

La figure 9 représente le dispositif de maintien à hauteur constante proposé dans les figures 1 et 4. Ce dispositif comprend : une bague 101 avec épaulement pour son positionnement dans la base 10, et un segment d'étanchéité 11 ; une bague 101 a avec joint et gorge extérieure 97, gorge intérieure et orifice 18 ; une bague 101 b avec joint et gorge 97, segment 11 et gorge intérieure et orifice 10 ; une bague 101 f avec joint et gorge 97, segments 11, et filetage ou autre moyen de fixation 102, de l'ensemble de ces bagues dans leur logement dans la base 10 ; la tige 1 avec les rainures-tiroirs 19 et 40. Ce mode d'assemblage permet la mise en place de segments d'étanchéité et d'usure sans jeu à la coupe, travaillant sur leur face interne, au contraire des segments connus qui sont logés dans le piston et travaillent sur la face interne d'un cylindre. Etant monobloc et du fait de sa conception, le dispositif présentement décrit est facilement interchangeable.

La figure 10 représente une variante de l'ensemble de la figure 4. Le ressort de suspension 28 est placé entre la plaque supérieure de fixation 31, et la plaque de maintien 36 sur le piston creux 24.

Elle montre la position la plus basse du dispositif entre chassis et essieu. On y voit la hauteur de liquide restant dans la chambre 17, y formant un espace anti-butée hydraulique, l'orifice d'échappement 18 étant fermé par le segment 25. Une garde est conservée dans le fond du cylindre 5, entre piston 4 et fond 43.

La figure 11 représente le même ensemble dans sa position normale de hauteur constante. La hauteur du liquide dans la chambre 17 sera différente suivant la charge sur le ressort 28.

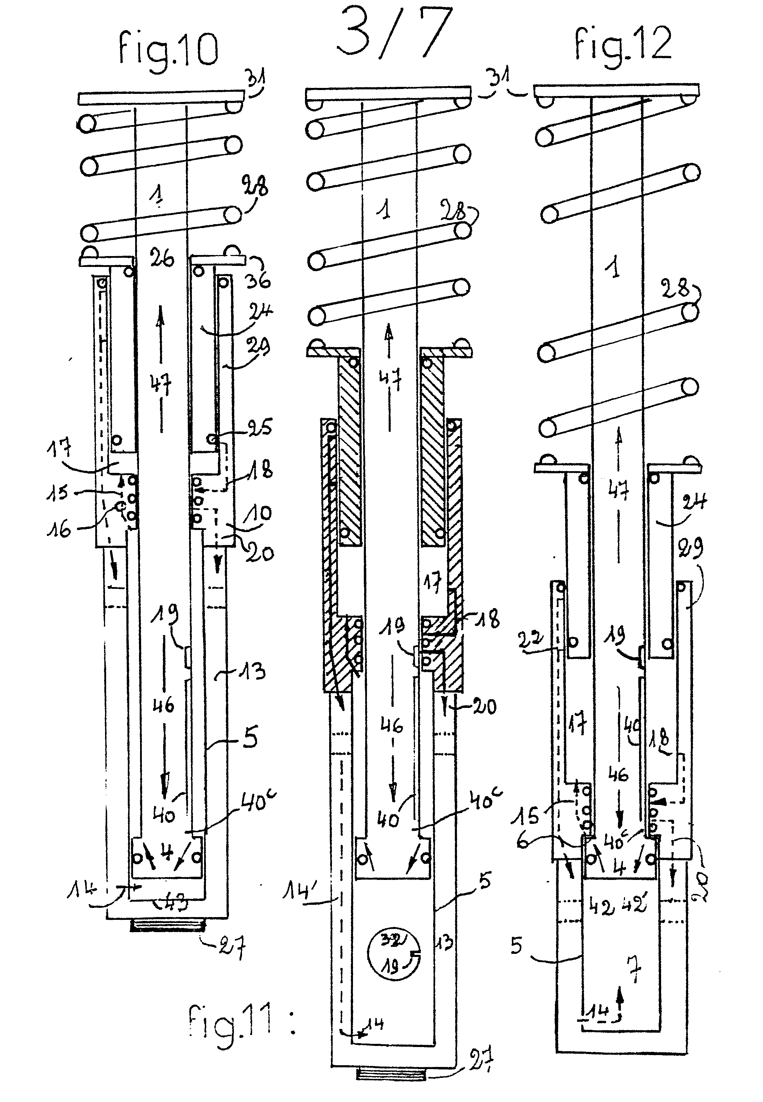

La figure 12 représente l'ensemble dans sa position la plus haute, par exemple roue pendante, lorsque le véhicule est soulevé du sol. Le piston 4 est en bout de course contre la base 10. Les chambres 17, 6 et 7 par l'amortisseur de descente 42, les canalisations 18 et 20 communiquent entre-elles, par la rainure 40, permettant au piston 4 de redescendre dans une position normale. La petite partie non rainurée 40 c, entre 40 et piston 4, est destinée à ralentir l'approche du piston 4 et base 10 en fin de course, l'échappement ne se faisant à ce moment que par l'amortisseur 42', et le canal 15.

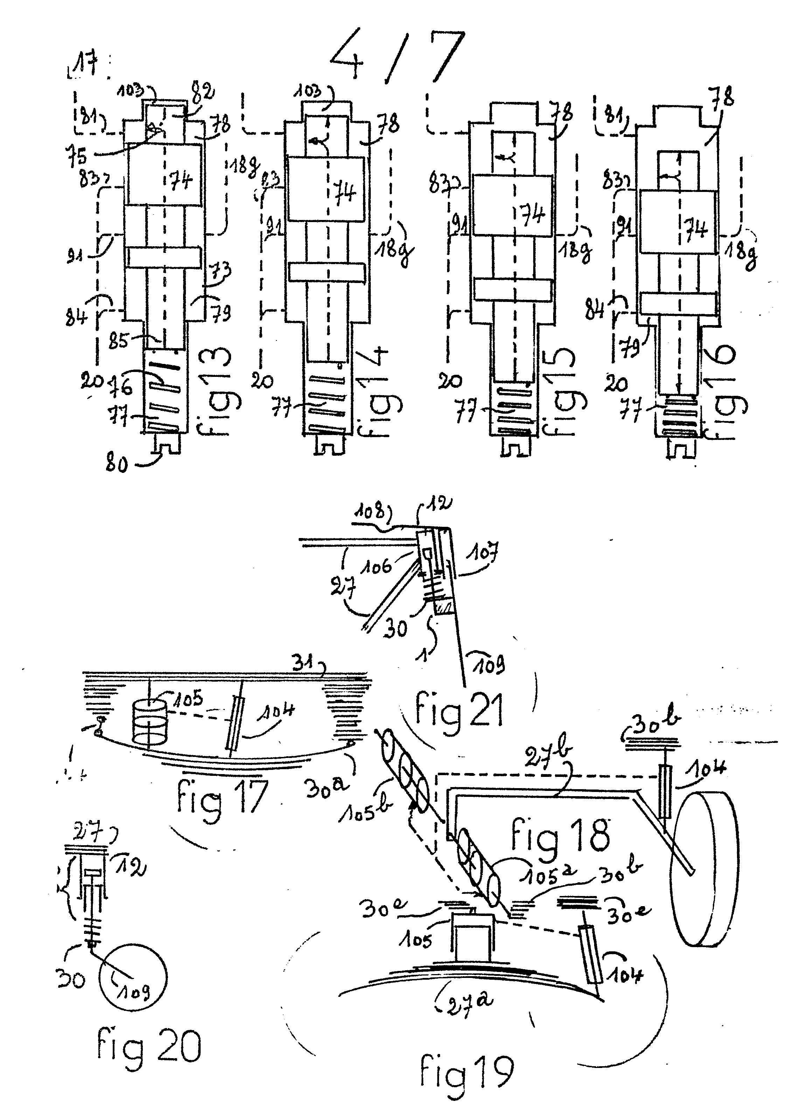

les figures 13, 14, 15, 16, montrent le fonctionnement du dispositif de rattrapage du déplacement du centre de gravité, dont les cylindre 73 et piston 74 sont visibles dans la figure 29 à laquelle il sera fait référence pour les explications qui suivent, pour les éléments non-portés sur les figures maintenant étudiées. Elles seront considérées en tenant compte que le passage reste ouvert à un niveau quelconque situé entre les canalisations 18 a et 18 b d'une part, et 18 c, 18 d ou 18 e d'autre part, par l'intermédiaire de la rainure 19, le liquide circulant ainsi jusqu'au cylindre 73.

La figure 13 montre ce cylindre à deux diamètres différents, dans lequel coulisse un piston 74 maintenu dans la position indiquée représentant une charge minimale jusqu'à moyenne de la suspension, par un ressort 76 dont la poussée est réglable par la vis 80. Par la canalisation 81 le liquide de la chambre 17 (repère encadré en haut dans la figure 13), parvient directement dans la chambre 78. Par le conduit 75 il atteint en 85, calibré pour freiner les mouvements de translation du piston 74, la chambre 77, et en 82 calibré dans le même but, la butée hydraulique 103. La pression est identique dans les trois chambres précitées. La canalisation 18 g venant du cylindre 90 de de mise à des hauteurs différentes communique par le moindre diamètre du piston 74 avec l'écoulement 91, puis 20, vers le réservoir 13. Une canalisation 83 fermée par le piston 74 est reliée à l'écoulement 20. La canalisation 84 est une décompression de la chambre 79. Le piston 74 ayant ses deux extrémités à des diamètres différents, le ressort 76 s'ajoute à la pression de la chambre 77 pour équilibrer celle de la chambre 78 avec butée 103., de diamètre plus grand.

Dans la figure 14, lorsque la pression monte dans ces chambres, elle devient plus forte côté chambre 78/103 et le piston 74 est alors poussé selon la charge imposée, vers la chambre 77 où le ressort 76 est insuffisant pour compenser la pression plus faible sur cette extrémité du piston 74. Le passage entre 18 g et 91 reste cependant ouvert.

Dans la figure 15, si la pression générale dépasse une limite préétablie correspondant à la moindre résistance du côté de la chambre 77, à laquelle s'ajoute la pression du ressort 76, et selon l'emplacement de l'échappement 91 sur le parcours du piston 74, cet échappement se ferme alors que la canalisation 83 reste également fermée. Le liquide s'accumule dans la chambre 17 dont la hauteur augmente, tendant à déplacer la charge sur chassis, du côté opposé du véhicule, qui est le moins chargé et où la suspension est demeurée à la hauteur constante normale.

Figure 16, lorsque la pression en 78 devient trop importante, le piston 74 étant poussé davantage vers la chambre 77, l'orifice 83 s'ouvre laissant passer directement du liquide de la chambre 17 vers le réservoir 13. La pression baisse, ramenant le piston 74 vers la chambre 78, en refermant l'orifice 83. LA limite de la pression admissible dans le dispositif est ainsi atteinte. Lorsqu'elle redevient normale le piston 74 revient à une position proche de celle des figures 13 ou 14.

Les figures 17 à 21 illustrent différentes utilisations non-limitatives du dispositif de suspension en une ou en deux parties.

Dans la figure 17 L'ensemble pompe-tiroir de mise à hauteur de la figure 1 est numéroté 104, et l'ensemble compensateur de hauteur de la figure 2 porte le numéro 105, sans la suspension élastique, remplacée par un paquet de lames 30 a. Ceséléments 104 et 105 sont placés entre un chassis 31 et l'essieu/lames de ressorts 30a. les oscillations imposées à la pompe 104 seront plus amples que celles imposées au même moment au compensateur de hauteur 105, qui se trouve plus près de l'articulation 114 située entre chassis et essieu.

Figure 18, le montage en deux parties se afit entre une barre de torsion 27b et un chassis 30b. 105a en compression, 105b en traction.

La figure 19 représente le compensateur de hauteur 105 monté directement sur chassis 30e, dans l'axe du balancier d'un double-pont à ressorts à lames 27a. La pompe 104 est positionnée dans l'axe d'un essieu entre ressort 27a et chassis 30e.Les mouvements de cette pompe 104 seront développés davantage que ceux du compensateur de hauteur 105.En installant la pompe à un endroit du paquet à lames 27a plus proche du compensateur 105, on obtient des mouvements moins amples que dans la présente figure.

Figure 20 on voit l'utilisation d'un ensemble monobloc 106, tel que celui des figures 10, 11 et 12, placé ici tête en bas, le cylindre 12 étant solidaire du chassis 27, la fixation 30 comporte un bras rigide ou souple comme une fourche de deux roues , orientable ou non, pour remorque par exemple.

Dans la figure 21.le même ensemble 106 que dans la figure 20 est fixé par son cylindre 12 au cadre 27 d'un deux roues, et sert d'axe-pivot de direction.

La figure 29 contient l'ensemble des éléments composant l'invention décrite jusqu'ici. Les amortisseurs des figures 5 6 et 7 ne sont représentés que par le clapet de non-retour 44. On peut voir en outre la pompe d'alimentation : tige 1, piston 4, cylindre 5,clapet 14, réservoir 13; le compensateur de hauteur est symbolisé par la chambre 17; la mise à hauteur constante représentée par les segments 11, la rainure 19. Le rattrapage du centre de gravité par le cylindre 73 et le piston 74, La mise à des hauteurs dif-

?érentes composées des canalisations 18 à 18g, par le cylindre 90 et le piston 99. La suspension élastique ne figure pas sur le dessin et est seulement rappelée par le repère 28. De la description qui va suivre il ressort que par l'ensemble des éléments en place l'écoulement d'une partie du liquide contenu dans la chambre 17 ne peut se faire que lorsque les trois passages suivants sont ouverts en même temps: entre 18a et 18b d'une part, et 18c et 18d ou 18e d'autre part; entre 18c, d ou e, et les canalisations 18f ou 93. Et entre les canalisations 18g et 20, en passant par 18f. Le tiroir 99 à multiples passages, se déplaçant dans le cylindre 90, forment ensemble le dispositif de mise à hauteurs différentes. Le piston est maintenu dans le haut de la chambre 89 par un ressort de rappel 100. L'embout 111 est prévu pour la liaison à un dispositif de commande à distance connu ou à venir., et non-decrit dans la présente. Dans cette position le passage étant ouvert entre 18b, 19 et 18c, le liquide va au travers du piston 99 par l'orifice 95 vers la canalisation 18f. Les chambres 88 et 89 comportent des orifices de décompression 86 et 86'reliés au trop-plein 21.

La figure 22 représente la position qui vient d'être décrite pour la figure 29. Elle correspond à une position surbaissée du véhicule par rapport au sol, recherchée pour la conduite sportive.

Dans la figure 23 qui doit être étudiée conjointement avec la figure 26, le piston 99 est déplacé d'un cran vers le bas du cylindre 90 fermant ainsi l'orifice 18c. L'échappement du liquide cesse et celui-ci s'accumule dans la chambre 17 ( fig.29), y faisant monter le piston 24 jusqu'à ce que la rainure 19, entraînée par ce mouvement dans le sens 47, arrive entre les canalisations 18b et 18d de la figure 26. Dans cette nouvelle position chassis et essieu sont éloignés davantage que dans la position surbaissée de la figure précédente.

La figure 26 est une variante de la figure 9 et comporte un plus grand nombre de passages. L'ensemble forme un cylindre composé étanche intérieurment, et entre les diverses canalisations.Cette combinaison permet la mise en place de segments d'étanchéité 11, travaillant ici par frottement de leur face interne sur une tige 1 au contraire des segments connus, qui sont logés dans le piston et coulissent sur la face interne d'un cylindre. La combinaison permet aussi le remplacement facilede ces pièces d'usure, et de la ' tige 1, en conservant les éléments statiques. Le nombre de bagues orifices, joints et segments peut être réduit comme dans la figure 9, ou augmenté suivant le résultat recherché. Les joints annulaires 11 peuvent être fermés.

La figure 24 est à étudier en même temps que la figure 27. Le piston 99 est déplacé de deux crans. Les canalisations 18 e et 93 sont seules ouvertes. 18 d et 18 f étant fermés, le liquide ne s'échappe plus, s'accumule dans la chambre 17 de la figure 29, jusqu'à ce que la rainure 19 mette en communication les canalisations 18a et 18e (figures 27 et 29). 93 étant un retour direct au réservoir 13, le rapprapage de dévers 73-74 qui fonctionne en cas de besoin dans les deux positions précédentes, ne se produit plus. La position du véhicule est ici encore plus haute, et pourrait être une hauteur préférée pour une circulation à vitesse raisonnable dans des lieux où une meilleure visibilité des alentours est souhaitée.

Dans la figure 25 le piston 99 est déplacé à fond vers le bas du cylindre 90 dont toutes les canalisations sont fermées.

La figure 28 montre la position à laquelle est alors amenée la tige 1 qui met en communication l'orifice 18b avec la chambre 6 par l' intermédiaire de la partie 40a de la rainure d'échappement. Dans les mouvements de descente 46, l'excès de liquide des chambres 6 et 7 est envoyé directement dans la chambre 17 dont la hauteur augmente proportionnellement. Lorsque la remontée dans le sens 47 s'amorce, le liquide dans la chambre 6, retenu par le non-retour 44, monte vers 17 par la rainure 40a et s'ajoute au volume déjà en place dans cette chambre. Durant ce même mouvement le piston 4 aspire du liquide dans la chambre 7. Les mouvements 46-47 se poursuivant, le piston 24 dans le cylindre 29 sera amené jusqu'à l'orifice de trop-plein 22, qui est la limite de hauteur de cette chambre 17. Suivant la charge sur la suspension élastique 28 l'éloignement entre chassis et essieu sera plus ou moins important. Pour un véhicule très peu chargé la limite d'éloignement sera la fin de course du piston dans le cylindre 5 coté chambre 6, contre la base 10, à l'endroit où elle est traversée par la tige 1. A l'approche de cette position, lors d'un mouvement dans le sens 47, le contact entre piston et base est adouci par le freinage déjà expliqué dans la figure 12. Mais ici le liquide passe plus lentement, par la canalisation 15 seule, le non-retour 44 du piston 4 restant fermé dans ce mouvement. Selon que le dispositif de mise à hauteurs différentes est ensuite mis dans l'une des positions des figures 22, 23 ou 24, la partie 40b de la rainure permettra l'écoulement d'une partie du liquide de la chambre 17 par les canalisations 18 c, d ou e, vers lesquelles le passage sera également ouvert pour les orifices 18a et 18b. L'orifice 98 est un relai pour l'échappement de la chambre 17 lorsque le piston 1 est complètement levé et qu' il commence à descendre.

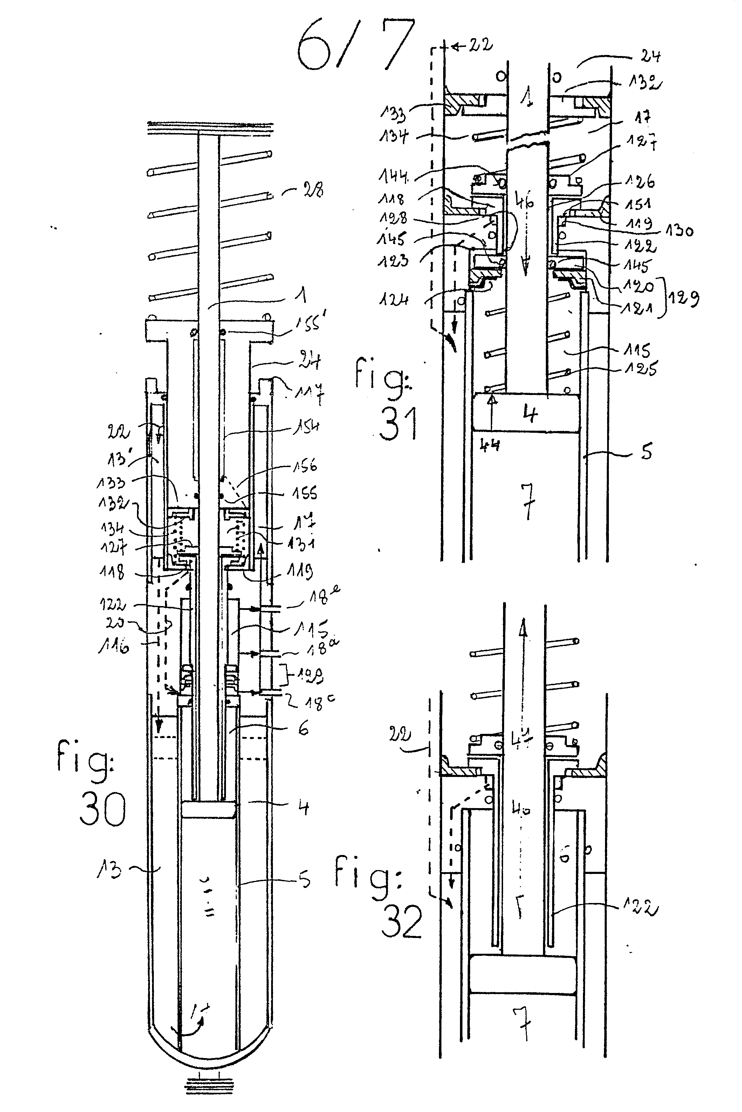

La figure 30 représente un ensemble complet en variante de la figure 29. avec un cylindre-chambre 115 contenant en particulier des joints composés 129, et sur le haut des cylindres de réservoirs , une butée de protection 117, empêchant la détérioration des éléments dans la chambre 17 lors de la descente du piston 24 vers le fond de cette chambre.

La figure 31 montre les éléments d'une réalisation à une seule hauteur moyenne constante. Le cylindre 115, de diamètre plus grand que la partie inférieure de la soupape à double action 118 appliquée sur le joint à lèvre extérieure, ou autre 119, contient une bague 120 à joint torique intérieur 145 et disposé juste sous la queue creuse 122 de la soupape 118 qui dépasse le plan 123 du cylindre 115 vers l'intérieur de celui-ci; un joint à lèvre extérieure 121 à ressort ou non, et une rondelle-cuvette 124; un ressort de compression 125 entre cuvette 124 et piston 4. La chambre 17, fermée au-dessus par le piston annulaire 24, est étanche de ce coté, en fonctionnement normal, par le joint 133, maintenu par la bague 132 comprimée par le ressort 134 dont l'autre extrémité comprime la tête 127 de la soupape à double action 118. Dans la chambre 115, la rondelle-cuvette 124 protège le joint 121 de contacts directs avec le tube 5 dans sapartie supérieure. La longueur libre du ressort 134 doit être établie de manière que sa position détendue laisse le joint 133 en-dessous de l'orifice de trop-plein 22.

Le fonctionnement est le suivant : Tant que la hauteur constante n'est pas atteinte, les bagues 120 et joint 121 sont libres et ne subissente aucune poussée. Quand la hauteur définie par la longueur libre du ressort 125 est obtenue, ce ressort poussé par le piston 4 vers le haut, commence à comprimer la cuvette 124 contre le joint 121, et celui-ci contre la bague 120, formant un ensemble étanche 129. Lorsque la tige 1 descend dans le sens 46, du liquide de la chambre 7 est chassé dans la chambre 115, passe par l'espace annulaire 126 entre la tige 1 et la queue de soupape 122, soulève le chapeau 127 muni d'un joint 144 formant le clapet d'admission dans la chambre 17. A ce moment, la pression est égale dans les chambres 17 et 115. La surface réelle du joint-composé 129 etant plus grande que la surface réelle de la soupape 118 appuyée sur le joint 119, par pression différenciellel'ensemble 129 est poussé vers la paroi 123. La queue 122 comportant une entaille 128 à sa base, le liquide entre joint-composé 129 et paroi 123 passe dans l'espace annulaire 126 vers le chapeau 127 et la chambre 17. Dans le même temps la queue 122 est poussée dans la chambre 17, dégageant ainsi le passage entre joint 119 et soupape 118. Le fluide s'échappe vers la canalisation 20, et le réservoir 13. La hauteur dans la chambre 17 diminue, la tige 1 et le piston 4 redescendent dans la chambre 115 et 7, et la soupape 118 ferme de nouveau l'échappement en comprimant le joint 119. Les mouvements habituels du véhicule continuent, ainsi que le processus qui vient d'être décrit, maintenant une hauteur moyenne constante.

Dans la figure 32, la queue 122, plus longue que dans la figure 31, est directement soulevée par le piston 4 lors d'un mouvement dans le sens 47, au contraire de la figure 31, où c'est le mouvement en sens 46 qui provoque l'échappement. Pour adoucir le contact entre 122 et piston 4, on peut intercaler une rondelle d'un matériau dûr et amorphe, en nylon ou autre, ou un ressort dûr non-figuré. Ceci peut s'avérer nécessaire suivant la surface de contact de la soupape 118 avec le joint 119, dont la poussée sera plus ou moins importante suivant la pression exercée sur elle dans la chambre 17. La pression du ressort 134 sur la soupape 118 peut être considérée comme négligeable.

La figure 33 montre en détail les parties actives du dispositif de cette variante de suspension. Dans la chambre 115 les joints-composés 129a et 129b doivent avoir une surface réelle moins grande que la surface utile de la soupape 118, de manière que par pression différencielle celle-ci reste maintenue contre le joint 119. Le ressort 134 maintient également le joint 119, à une longueur telle que dans sa position détendue il laisse le joint 133 en-dessous du trop-plein 22. Le ressort 131 dont le rôle est de ramener la soupape 118 au fond de son logement, peut être appliqué directement par son extrémité opposée, sur le piston 24, ou par l'intermédiaire de la rondelle 148. A partir du bas la chambre 115 contient une superposition qui est la suivante : Un ressort 136 de longueur définie pour mettre le joint de l'ensemble 129a au maximum en-dessous de l'échappement 18 d. L'ensemble 129a. Un ressort 137 dont la longueur libre doit laisser le joint de l'ensemble 129b sous l'échappement 18e. Un ensemble 129b. Lorsque l'échappement 18c est ouvert, et éventuellement les échappements 18d et 18e, rien n'empêche l'écoulement du liquide de la chambre 17 quand la queue de soupape 122 est soulevée par le piston 4. C'est la position de hauteur la plus basse. Les ensembles 129a et 129b, les ressorts 136 et 137, sont comprimés et maintenus au fond du cylindre 115 par le diamètre plus grand 150, de la queue 122, tenue en place elle-même par la pression dans la chambre 17.

Si comme dans la figure 34, on ferme l'échappement 18c, le liquide venant de la chambre 17, retenu après le non-retour 138, et par l'échappement 18e, s'accumule sur le joint-composé 129a. La hauteur augmente dans la chambre 17, le piston 4 monte et pousse la queue 122 vers le haut, jusqu'à ce que le ressort 136, arrivé à sa hauteur libre, cesse de comprimer l'ensemble 129a, ouvrant ainsi entre ces deux éléments le passage vers 18d. Ensuite le processus habituel déjà décrit, mais avec une hauteur moyenne constante à un niveau plus élevé que dans la figure 33. L'ensemble 129b quant à lui reste comprimé entre le rebord du plus grand diamètre 150 de la queue de soupape 122, et l'ensemble 129a. Durant le mouvement de montée qui vient d'être décrit, le joint de l'ensemble 129b passe devant l'orifice 18d, mais ne subit pas de pression à ce moment.

Figure 35, de la même manière que le joint-composé 129a, dans la figure 34, mais ici avec l'échappement 18d également fermé, l'ensemble étanche 129b va monter jusqu'à l'échappement 18c et maintenir une troisième hauteur, plus grande que les précédentes. Dans cette figure 35, on voit dans la chambre 17 le ressort 134 arrivé à sa longueur libre. Le joint 133 n'est plus appliqué contre le piston 24 et le liquide excédentaire arrivant par le clapet 127 s'échappe par le trop-plein 22. Il serait possible d'obtenir une quatrième hauteur en allongeant la distance entre les chambres 17 et 115, la queue de soupape 122, le ressort 134, et en déplaçant vers le haut l'échappement trop-plein 22, augmentant ainsi la course du piston 24. De même en ajoutant un échappement aux trois 18c, 18d, 18e déjà indiqués. Le nombre des hauteurs peut être plus important si on le désire.

Dans les figures 30 à 35, tous les joints représentés peuvent être différents, et ne sont représentés qu'à titre d'exemple non-limitatif. Par exemple les bagues 120, 120a, 120b, peuvent être remplacés par des joints armés, ou autres. Figure 31 le joint 133 est maintenu par une bague 132, dont la hauteur comprimante sera d'environ 1/10° par exemple, moindre que l'épaisseur du joint lui-même, évitant ainsi sa détérioration, l'embout en contact avec le piston 24 limitant cette compression. Le joint à lèvre 119 est en contact direct avec la base de la soupape à double effet, comprimée comme le joint 133, avec une butée de sécurité 151. La bague 120 comporte un joint torique 145. Le joint à lèvre extérieure 121 a un diamètre intérieur suffisamment grand pour le passage de liquide. La bague 120 est d'un diamètre moindre que le diamètre inérieur de la chambre 115 pour permettre également le passage de liquide. Figure 33 et 34, le joint 133 est maintenu par une bague-guide 135. Le joint 119 est maintenu directement par le ressort 134. Ressort 136 et joint 121a, ressort 137 et joint 121d sont en contact direct. Figure 35, la bague 120b contient un joint en U 146. La bague 120a a un joint à lèvre intérieure 147. Pour les hauteurs différentes, le cylindre peut être d'un seul diamètre, comme dans figures 30, 33, 34. ou en plusieurs diamètres différents, ici deux, pour trois hauteurs différentes, comme dans la figure 35. Un évasement est alors conseillé ( 149 ) à l'entrée du 2ème étage 115b pour l'introduction sans dommage du joint 121B, qui n'est er pression qu'une fois franchi ce passage, lorsque les échappements 18c et 18d sont fermés.

Figure 35, sans cependant exercer une pression en fin de course préjudiciable au joint 121a, la longueur du ressort 136 peut être plus grande que la course du joint, celui-ci s'arrêtant de toute façon devant le moindre diamètre de l'étage suivant, à condition que la bague 120a puisse s'introduire dans cet étage, se séparant du joint 121a. Dans la partie 115b cette bague 120a doit laisser le passage au liquide qui doit arriver au joint 121b, et lorsque la bague 120b s'en sépare, aller vers l'échappement 18e. Si un logement 152, en pointillés sur le dessin, est pratiqué, la bague 120b s'y engage en fin de course, le joint 121b touche le plafond 123 et le passage est libre pour le liquide, vers l'échappement 18e même avec un ressort 137 trop long. En disposant les sorties 18d et 18e au droit des pointillés, aucun joint ne passe directement sur celles-ci. La soupape 118 comporte comme la bague 132 une butée protégeant le joint 119 d'un écrasement excéssif. Dans les figures 30 à 35 inclus les dispositifs que l'on vient de décrire pour l'étanchéité du périmètre et de l'intérieur de ce perimètre, des tubes et noyaux y coulissant, avec échappement contrôlé, peuvent épouser toutes les formes qui seraient exigées, mais sont utilisés dans le dispositif faisant l'objet de l'invention sous la forme cylindrique qui est courante.

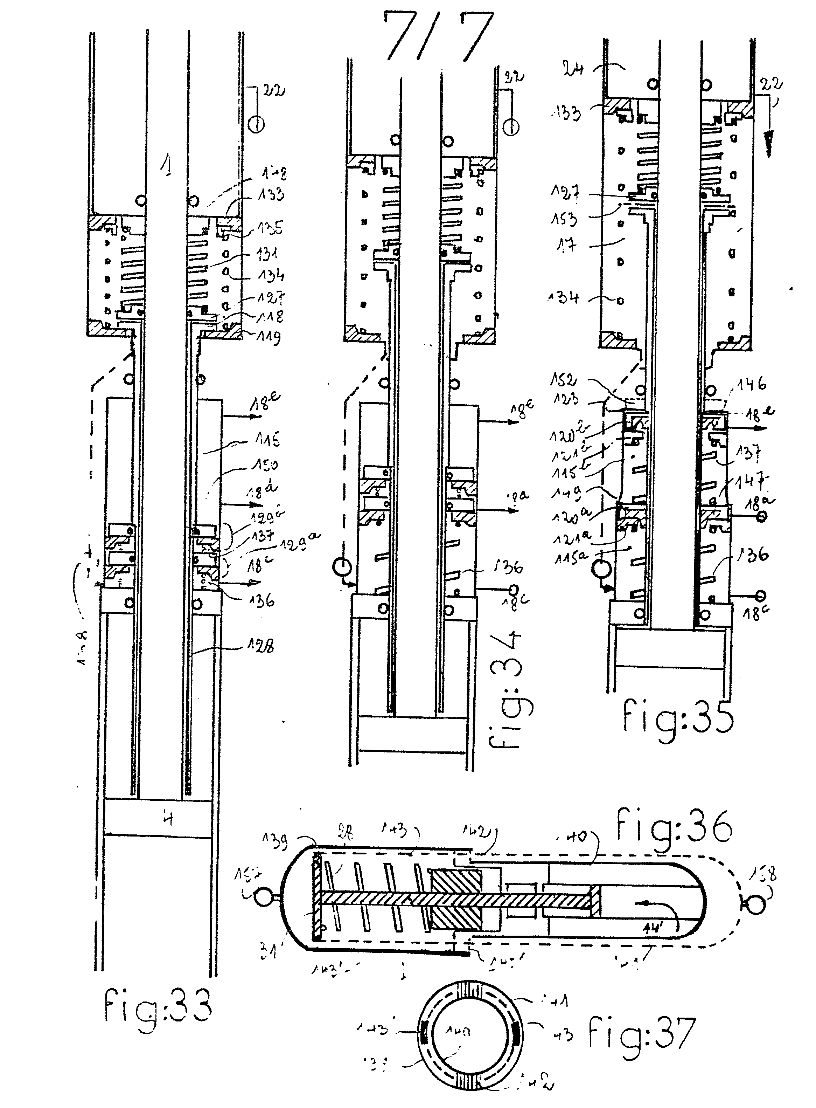

Les figures 36 et 37 conjointement, montrent une réalisation non-limitative d'un dispositif permettant la mise en place d'une suspension-amortisseur travaillant en compression, pour obtenir une suspension en traction. Dans la clocche-tube 139 reliée par la fixation 142-142' au tube extérieur de réservoir 140, est logée la tête 31 du ressort de suspension 28, fixée sur la tige de piston 1 et sur les branches 143-143' formant étrier, et fixées à leurs autres extrémités à la cloche 141. La partie en pointillés à l'intérieur de la cloche 139 représentant les branches 143-143' dans figure 36 est donnée pour mieux matérialiser la position des deux éléments de traction, mais est en réalité placée transversalement, comme dans figure 37 ( coupe ). Pour les dispositions autres que verticales - ici horizontale - il est prévu une rallonge 14 ' sur l'aspiration 14, dans pompe d'alimentation. Les points 157 et 158 symbolisent les attaches aux parties tirantes du véhicule. Ce dispositif peut être installé pour des amortisseurs seuls.

Il est remarquable que tant pour le dispositif objet du brevet que pour les variantes présentées dans les figures 30 à 35, comme dans la plupart des amortisseurs existants actuellement sur le marché, seulement deux points de frottement sont en alignement rigide, sur l'axe coulissant de l'ensemble : l'alésage du piston 24 sur la tige 1, et l'intérieur du tube 5 sur le piston 4. Tous les autres éléments mobiles se déplacent sans lien direct avec ces deux points. En particulier la soupape 118 grâce à son alésage 126, passage de liquide, ne touche pas directement la tige 1. La tête de clapet 127 est une pièce séparée à une face rodée s'appliquant sur la face vis à vis du dessus de la soupape 118, également rodée. Dans la figure 35, le cas d'une tête 127 vissée ou fixée par un autre moyen, pour permettre la mise en place d'une lamelle-clapet 153 classique formant non-retour, avec un ressort et des passages de liquide non-figurés, les tolérances normales d'usinage sur les pièces montées concentriquement, et l'espace annulaire 126, donnent une certaine souplesse à ce point précis, comme pour le cylindre-composé des figures 9 et 26, déja décrit, tout en conservant l'étanchéité requise.

En ce qui concerne le piston 24 dont la longueur est relativement importante, dans la figure 30 un évidement 154 réduit de manière appréciable la zone de frottement sur la tige 1. Un joint d'étanchéité huile-poussière retient le liquide amené par le canal 156 lorsque le joint 133 arrive en bout de course et que par trop-plein il passe devant ce canal sous basse pression, permettant ainsi la lubrification de la tige 1, entre les joints 155 et 155'.

Le clapet d'étanchéité de l'échappement contrôlé de la chambre 17 constitué par le dessous de la soupape 118 appliquée par la pression d'un ressort 131 ou 134, avec butée protectrice de joint 151, sur le joint 119, peut être remplacé, en enlevant ce joint et sa butée protectrice, par un siège pratiqué dans le fond de la chambre 17 dans lequel serait ajusté et rodé le bas de la soupape 118, avec profil convenable pour la fermeture de cette variante de clapet non-représenté.

L'étanchéité du haut de la chambre de compensation de hauteur 17, constitué par un joint périmétrique 133 appliqué par un ressort 134 et une rondelle 132 ou 148 sur le piston 24, et par le joint 155 entre le piston 24 et la tige 1, peut être remplacé par un joint classique torique ou autre, à l'emplacement des segments 25 des figures 2, 3 et autres suivantes, l'échappement se faisant par trop-plein au moyen d'un ressort à longueur préétablie appuyant sur une bague 148 adaptée dans un siège pratiqué dans le piston 24, en - deçà du joint 155, par un canal commençant entre le siège de soupape et le joint 155, et débouchant à l'extérieur du piston 24, au-delà du joint torique remplaçant les segments 25, au niveau du retour 22 vers le réservoir.

Revendications

1 - Dispositif correcteur autonome à action directe, progressive, proportionnelle et automatique, en une ou plusieurs parties, complet pour chaque roue ou équivalent, à fonctions multiples, pour la suspension des véhicules à moteur ou non, à une ou plusieurs roues, à charge uniformément répartie, utilisant l'énergie produite par les mouvements spontanés oscillatoires entre chassis et essieu des véhicules en circulation, auxquels le dispositif est destiné à remédier

Ce dispositif est caractérisé par ses composants : un accumulateur hydraulique qui peut travailler en compression ou en traction, à l'aide d'une pompe à piston, ces deux éléments étant connus en eux-mêmes. Avec limitation de course du piston flottant par trop-plein. Utilisé ici pour corriger et compenser les différences de hauteurs suivant la charge, d'une suspension élastique. La pompe et l'accumulateur pouvant être placés dans une position autre que verticale grâce à une rallonge du canal d'aspiration de liquide du réservoir vers la pompe. Le comportement du véhicule est corrigé aussi par : un tiroir-distributeur pour mise à hauteur constante, dont la translation et l'action distributrice sont solidaires d'une tige de piston avec rainure, ou du piston lui-même lorsqu'il n'y a pas de rainure sur la tige de piston d'alimentation, et sont formés d'un cylindre-composé percé à des niveaux convenables et en nombre suffisant pour la - ou les - hauteurs choisies, pour une tige à rainure, ou d'un ou plusieurs joints-composés, lorsqu'il n'y a pas de rainure sur la tige de piston, celle-ci d'un type connu, de manière à constituer une communication entre les différents niveaux des percements dans le cylindre, pour l'échappement du liquide contenu dans la chambre d'accumulation du compensateur de l'écrasement de la suspension élastique, lorsque la hauteur constante choisie entre chassis et essieu est dépassée. Le résultat en est une action anti-roulis lorsqu'un essieu au moins est équipé sur ses deux cotés, et anti-tangage quand ce montage est fait sur l'essieu avant et au moin sur un essieu arrière. Le dispositif comporte également un amortisseur de chocs, et des réactions qui en résultent. Il sélectionne le liquide d'amortissement suivant les efforts imposés, vers le réservoir et - ou - vers le compensateur de hauteur. Le dispositif comprend encore un tiroir-distributeur pour le rattrapage du déplacement du centre de gravité augmentant la hauteur du coté anormalement chargé lors d'un déplacement de ce centre de gravité de la caisse du véhicule, par rapport aux roues, latéralement ou longitudinalement. Un piston de pompe à sens unique de type connu, vers la chambre de compensation, ou vers le réservoir. Un tiroir-distributeur pour la mise à des hauteurs différentes, à commande non-automatique, agissant sur les orifices d'échappement du tiroir de mise à hauteur. Une suspension élastique d'un type connu ou à venir, dont la souplesse est rendue variable suivant la charge qui lui est imposée, par les effets de tout ou partie des divers correcteurs composant l'objet de la présente invention.

Ce dispositif peut ne pas comporter tous les éléments indiqués et agir seulement sur une ou sur quelques-unes des réactions à corriger Les composants du dispositif pris séparément peuvent être utilisés sur des suspensions existantes ou à venir, en combinaison avec une pompe d'alimentation à moteur ou non.

2 - Dispositif d'après 1, caractérisé en ce que le réservoir contient du gaz ou de l'air sous pression dans sa partie haute, pour l'accélération de l'entrée du liquide en réserve dans la pompe d'alimentation.

3 - Dispositif correcteur d'après 1, caractérisé par un filtre situé à distance entre le retour du fluide au réservoir, et l'aspiration par la pompe pour réutilsation, permettant un volume transitaire suffisant de part et d'autre pour une réserve disponible plus important tante que les besoins maximum immédiats en liquide.

4 - Dispositif correcteur d'après 1, le cylindre-composé formant tiroir de mise à hauteur constante ou à plusieurs hauteurs, étant caractérisé par la superposition de bagues à orifices et gorges, et joints extérieurs d'étanchéité, rendant possible la mise en place du coté intérieur, de joints annulaires fermés, ou de segments sans jeu à la coupe, simples ou multiples, pour l'étanchéité entre les différents niveaux.

5 - Dispositif correcteur d'après 1 et 4, caractérisé en ce que le cylindre-composé peut comporter un nombre variable de bagues, orifices et séparations étanches intérieures et extérieures pour la distribution de fluide qui, ici en liaison avec les rainures de la tige de piston de pompe d'alimentation d'une part, et d'autre part avec le tiroir de mise à hauteurs différentes, symbolisé par les repères 90 et 99, représente un sélecteur de mise à hauteur différentes.

6 - Dispositif correcteur d'après 1, caractérisé en ce que le ressort de compression 76 dont la poussée s'ajoute à la pression différentielle plus faible de son coté que dans la chambre 78, exerce une sélection entre les entrées et les sorties du cylindre de rattrapage du centre de gravité, selon la pression plus ou moins importante règnant dans la chambre 17 du compensateur de hauteur, et les chambres 77 et 78.

7 - Dispositif correcteur d'après 1, caractérisé en ce que le piston flottant du compensateur de hauteur comporte un segment d'étanchéité 29, simple ou multiple, en métal ou autre matière supportant sans dommage le frottement devant les orifices 18 et 22 pour l'ouverture et la fermeture du passage de liquide par ces orifices.

8 - Dispositif correcteur d'après 1, caractérisé par ce que l'amortisseur de remontée comporte un étranglement réglable 57, calibrant le passage du liquide, et refusant un débit supérieur à celui provenant de la chambre 6 lors d'un mouvement dans le sens 47, ou davantage si on veut réduire la quantité expédiée dans la chambre 17 du compensateur de hauteur, dans les mouvements dans le sens 46.

9 - Dispositif correcteur d'après 1, caractérisé par le fait que le piston 38 est maintenu dans la position requise pour l'écoulement du liquide lors du mouvement de remontée 47, par le ressort de compression 58, tant que le liquide en provenance des chambres 6 et 7 n'excède pas la quantité réglée par le calibreur 57.

10 - Dispositif correcteur d'après 1, 6 et 8, caractérisé par un orifice 83 s'ouvrant lors de la translation du piston 74, lorsque la pression dans le compensateur 17 est trop élevée, durant la fer-

meture des canalisations 18g et 91.

11 - Dispositif correcteur d'après 1 et 5, caractérisé par le fait que les passages du tiroir de mise à hauteurs différentes, sur la tige de piston 1, sont contrôlés par un dispositif représenté par le cylindre 90 et le piston 99.

12 - Dispositif correcteur d'après 1, caractérisé par ce que les fonds de cylindres 29, 43, 61, 62, 63, sont protégés contres les chocs des pistions par une butée hydraulique constituée en dessous et au-delà des orifices d'échappement.

13 - Dispositif correcteur d'après 1, 6, 8, 9 et 10 caractérisé par le réglage direct sur le véhicule, des vis 33, 34, 56, 56', 57 et 80, par le fait qu'elles se trouvent situées sur la surface extérieure du dispositif.

14 - Dispositif correcteur d'après 1, 2 et 3, caractérisé par une rallonge 14' adaptable sur l'orifice d'aspiration de liquide vers la pompe d'alimentation, permettant à celle-ci une position autre que verticale.

15 - Dispositif correcteur d'après 1, caractérisé par une soupape à double effet, comprenant une tête étanche 127, formant clapet de non-retour, un corps 118, dont le bas forme avec le joint 119 ou avec un siège dans le fond de la chambre 17, le moyen d'échappement du liquide de la chambre de compensation de hauteur; de la queue de soupape creuse 122, formant le canal d'amenée du liquide sous pression, dans la chambre de compensation. D'un ressort 134 pour une seule hauteur, et de celui-ci et d'un ressort 131 pour hauteurs différentes, maintenant simultanément la tête 127 contre le corps 118, et celui-ci contre le joint ou siège du fond de la chambre 17, et le joint 119.

16 - Dispositif correcteur d'après 1, caractérisé par le fait que l'échappement de la chambre 17 est provoqué par la pression différentielle règnant dans la chambre 115 sur un joint composé 129, lorsque celui-ci est comprimé par un ressort 125.

17 - Dispositif correcteur d'après 15, 16, caractérisé par le fait qu'en variante, c'est le piston de pompe 4 qui provoque l'échappement du liquide de la chambre 17.

18 - Dispositif correcteur d'après 15, 16,17, la mise à hauteurs différentes étant caractérisée par l'action combinée du piston 4 sur une queue de soupape 122 à deux diamètres extérieurs différents dont le plus grand maintient en place au fons du cylindre 115, le ressort 136, le joint composé 129a, le ressort·137·,ₑle joint composé 129b, lesquels agissent par blocage vers le haut du cylindre 115 de la queue de soupape au fur et à mesure que sont fermés les orifi ces d'échappement 18c, 18d et 18e, et que du fluide est introduit dans l'espace libéré par la montée de la queue de soupape.

19 - Dispositif correcteur d'après 15,16,17,18,caractérisé par un joint-composé par un joint annulaire à étanchéité périmétrique main tenu contre la face étanche d'un noyau coulissant dans un tube, par un ressort, et dont l'étanchéité cesse à un point préétabli, par la chute du serrage entre les différentes parties par le moyen de la mise à hauteur libre du ressort, en bout de course.

20 - Dispositif correcteur d'après 15, 19, caractérisé par un joint d'étanchéité périmètrique appliqué par un ressort sur un noyau coulissant dans un tube, dont l'étanchéité cesse par le moyen d'une butée située à l'intérieur du tube, à une distance préétablie qui limite la course du joint annulaire, éliminant sa pression contre le noyau.

21 - Dispositif correcteur d'après 1, caractérisé par ce que le mouvement de compression exercé sur les fixations au chassis et à l'essieu d'un véhicule, d'une suspension-amortisseur, ou d'un amortisseur seul, est transformé en mouvement de traction pour les installations nécessitant ce mode de suspension avec amortisseur, ou pour amortisseur seul, par le moyen de brides ou autres inverseurs, tirant ces fixations vers leurs extrémités opposées.

0099291

1/7

fig.1

fig.2

fig.3

fig.4:

0099291

2/7

fig 6

fig:8

fig:7

fig.5

fig.9

fig.10     3/7     fig.12

0099291

fig.11 :

fig 13

fig 14

fig 15

fig 16

fig 17

fig 18

fig 19

fig 20

fig 21

figures

fig.29

fig.26

fig 27

fig 28

fig: 30

fig: 31

fig: 32

6/7

0099291

fig:33

fig:34

fig:35

fig:36

fig:37

# 0099291

## DOCUMENTS CONSIDERES COMME PERTINENTS

| Categorie | Citation du document avec indication en cas de besoin des parties pertinentes | Revendication concernee | CLASSEMENT DE LA DEMANDE (Int. Cl. 3) |
|---|---|---|---|
| X | FR-A-1 098 852  (RENAULT) <br> * En entier * | 1,21 | B 60 G  17/02 |
| X | US-A-2 896 965  (G.C. MOUSTAKIS) <br> * En entier * | 1,21 | |
| X | GB-A- 536 263  (H.O. HENRY) <br> * Pages 8-13 * | 1,11 | |
| X | FR-A-1 372 092  (ARMSTRONG PATENTS CORP.) <br> * En entier * | 1,8 | |
| X | GB-A-1 029 290  (R. BOSCH GmbH.) <br> * Page 2; figure 1 * | 1 | |
| A | FR-A- 779 154  (PORSCHE GmbH.) <br> * En entier * | 1 | **DOMAINES TECHNIQUES RECHERCHES (Int Cl 3)** <br><br> B 60 G |
| A | FR-A-1 562 113  (G. BRISARD) <br> * En entier * | 1 | |
| A | FR-E-  94 271  (G. BRISARD) | 1 | |
| A | US-A-2 571 449  (O.K. HOBBS) | 1 | |
| A | US-A-3 083 026  (R.J. BROADWELL) | 1 | |

Le present rapport de recherche a ete etabli pour toutes les revendications

| Lieu de la recherche <br> LA HAYE | Date d achevement de la recherche <br> 03-10-1983 | Examinateur <br> CINQUANTINI B. |
|---|---|---|